# EUROPEAN PATENT APPLICATION

(11) **EP 0 779 130 A1**
(43) Date of publication of application: **18.06.1997**
(21) Application number: 96309161.6
(22) Date of filing: 16.12.1996
(51) Int. Cl.: B25B 23/00, F16B 21/12, B25G 3/26

(54) **Impact wrench clip**

(30) Priority: 16.12.1995 GB 9525759; 17.08.1996 GB 9617298
(71) Applicant: Kilpatrick Fraser Limited, Glasgow G4 0DL (GB)
(72) Inventor: Kilpatrick, Alexander, Airdrie, Scotland, ML6 9HJ (GB)
(74) Representative: Jones, Andrée Zena

(57) **Abstract**

The invention relates to a retaining device (20 ;26) as used in securing a power-driven socket (10) to a driving member (2) of power drive equipment. The socket (10) is provided with a groove and a transverse bore (12), which is aligned with a bore (6) of the member (2). The device (20 ; 26) comprises a pin (22 ; 28) which is received in the aligned bones (6, 12) and which is secured to the mid point of a clip member (24 ; 32) which is received in the groove (22). The clip member normally describes the greater part of a generally circular configuration having a first diameter, and in use is deformed by forcing the arm ends apart so as to describe the greater part of a second generally circular configuration having a second, longer, diameter, the pin (22 ; 28) extending internally across the clip member (24 ; 32) so as at least substantially to bisect said circular configurations. The pin (22) may be mounted on the clip member (24) by a welding technique or by providing the pin (28) with an aperture (30) through which the clip member (24) is pivotably received.

## Description

The invention is concerned with improvements in or relating to retaining devices for securing a power-driven socket to a driving member of power drive equipment.

Heavy-duty power-driven sockets are traditionally secured to the drive plug of a power drive tool or the like by means of a metal pin passing through aligned bores in the socket and plug. The socket member is provided with an annular groove in its external surface in the plane of the bore. When the pin is in place, it is prevented from falling out by means of an elastic O-ring received in the groove and holding the pin captive. Because the pin or the O-ring can easily be lost at the time of assembly or dislodged in use, one or two attempts have been to provide a retaining ring that incorporates a pin in its construction. These are sometimes difficult to manipulate and time-consuming to position correctly. It is therefore an object of the invention to provide a device that is robust and simple to use.

The invention provides, in a power-driven socket of the kind used to receive a driving member of power drive equipment, a retaining device comprising a rigid pin or rod adapted to be received in aligned bores of a socket and a driving member, said pin being secured at one end thereof to an intermediate point of an arcuate or part-annular spring clip member providing two opposed arm portions mutually biassed so that free ends of said arm portion are urged towards each other, the construction and arrangement being such that the clip member describes the greater part of a generally circular configuration having a first diameter, and is capable of being deformed by forcing the arm ends apart so as to describe the greater part of a second generally circular configuration having a second, longer, diameter, the pin extending internally across the clip member so as at least substantially to bisect said circular configurations.

Conveniently, the clip member may be in the form of a C-shaped spring steel clip.

In one example of a device according to the invention, the pin is secured by a welding technique to an intermediate portion of the clip so as to extend diametrically thereacross.

In another example the pin may be provided with an aperture extending transversely therethrough at an inner end thereof, an intermediate portion of said clip member being received in said aperture so that the pin extends diametrically across said clip member. In this arrangement, the clip member may preferably be provided with means to maintain the position of the pin aperture at an approximate mid-point on the clip member.

Advantageously, the clip member may be received within the aperture of the pin in a non-rigid manner, conveniently in a pivotal manner, so as to be capable of accommodating movement and stresses caused by vibration from operation of the power drive equipment.

Preferably, the pin may extend to a length exceeding that of said first diameter and less than that of said second diameter.

There will now be described two examples of retaining devices according to the present invention. It will be understood that the description, which is to be read with reference to the drawings, is given by way of example only and not by way of limitation.

In the drawings:-
Figure 1 is a perspective view of a socket, a drive plug and a first example of a retaining device according to the invention;
Figure 2 is a plan view of the retaining device of Figure 1;
Figure 3 is a part-sectional view of the device of Figure 1 in an assembly with the socket and the drive plug.
Figure 4 is a perspective view of a socket, a drive plug and a second example of a retaining device according to the invention;
Figure 5 is a plan view of the retaining device of Figure 4; and
Figure 6 is a part-sectional view of the device of Figure 4 in an assembly with the socket and the drive plug.

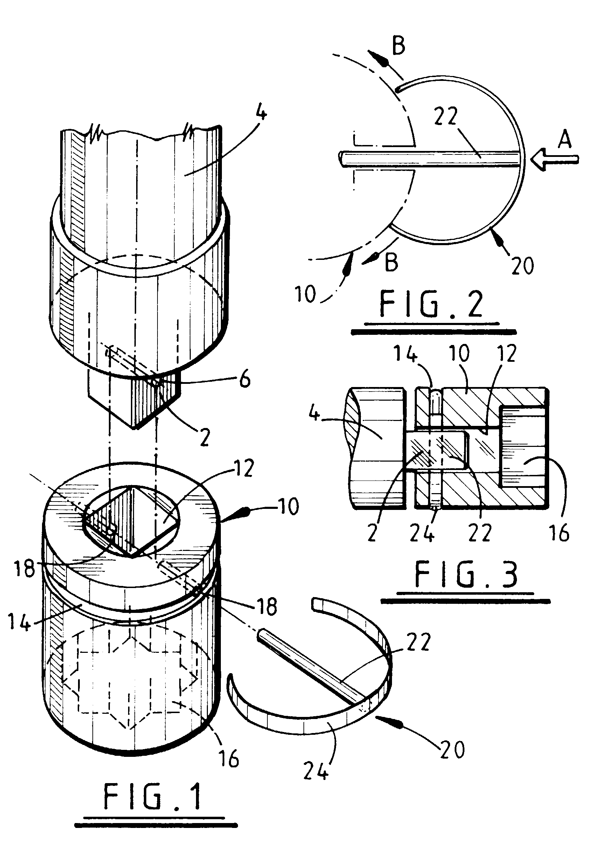

A driving member 2 of a conventional power drive equipment 4 comprising a square cross-section anvil having a bore 6 therethrough is shown in Figure 1. A conventional socket member 10 with an axial through-bore 12 has a cylindrical outer wall surface in which is formed an annular groove 14. The bore 12 is formed at one end with flats 16 forming in the present example a double-square configuration adapted to fix a correspondingly shaped nut (not shown). The main portion of the bore 12 is square in cross-section to correspond in shape and size to the anvil 2. A transverse bore 18 is provided in the socket 10, the bore 18 opening at each end into the groove 14. When the anvil 2 is received in the bore 12, the bore 18 is in alignment with the bore 6 of the anvil 2.

A retaining device indicated at 20 comprises a pin or rod 22 secured to an intermediate point of a spring steel clip portion 24. The clip portion 24 thus comprises two arm portions, free ends of which are urged towards each other in a part-circular configuration having a first, relatively small, diameter as shown in full lines in Figure 2.

In use, the pin or rod 22 is introduced into the aligned bores 6 and 18 until the free ends of the clip portion 24 contact the socket 10 in the region of the groove 14, as shown in Figure 2. Continued pressure in the direction of the arrow A causes the arm end portions to move apart (arrows B) so that the clip portion 24 takes up a second part-circular configuration having a larger diameter than that of the first diameter mentioned above. The length of the arm portions is selected so that whether the clip portion 24 is in its normal condition or is opened up to engage around the socket 10, the clip portion always describes a part-circle that includes an angle of sufficiently more than 180°C to provide a firm grip.

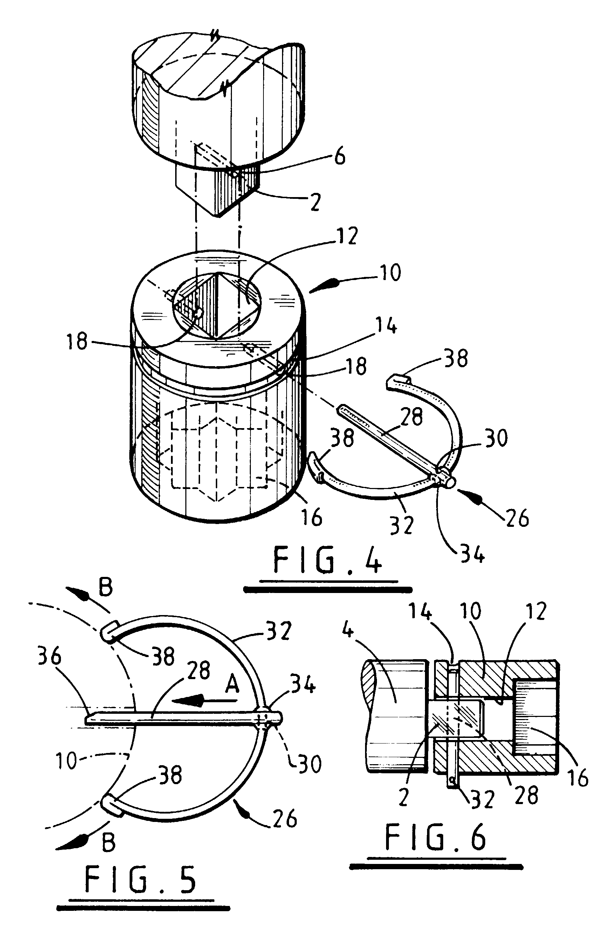

Figures 4-6 illustrate a second example of a device according to the invention for use in a driving member 2 which is identical to that shown in Figures 1-3. For the sake of consistency, like parts of the driving members are identified by the same reference numerals.

The second example of a retaining device according to the invention is indicated in Figures 4-6 at 26 and comprises a pin or rod 28 having an aperture 30 at one end thereof through which passes a spring steel clip portion 32. Protuberances 34 formed at a mid-point of the clip portion 32 prevent the pin or rod being dislodged from a generally central position with respect to the clip portion. The clip portion 32 thus comprises two arm portions, free ends of which are urged towards each other in a part-circular configuration having a first, relatively small, diameter as shown in Figure 5.

As in the first example, the pin or rod 28 is introduced into the aligned bores 6 and 18 until the free ends of the clip portion 32 contact the socket 10 as shown in Figure 2, in the region of the groove 14. Entry of the pin or rod 28 may be facilitated by providing a guide or pilot surface 36 on the leading end of the pin. Continued pressure in the direction of the arrow A causes the arm end portions to move apart (arrows B) so that the clip portion 32 takes up a second part-circular configuration having a larger diameter than that of the first diameter mentioned above. The length of the arm portions is selected so that whether the clip portion 32 is in its normal condition or is opened up to engage around the socket 10, the clip portion always describes a part-circle that includes an angle of sufficiently more than 180°C to provide a firm grip.

The retaining device 26 may be readily removed from the groove 14 with the assistance of tab means 38 provided on outer end portions of the clip portion 32 which may readily be engaged by the operative's fingers.

It will be found that the use of a retaining means which combines the grip of a spring clip and the flexibility permitted by the passage of the spring clip loosely through an aperture in the pin, produces an arrangement in which even severe vibration in use does not readily dislodge the rod from the bores 6 and 18.

Various modifications may be made within the scope of the invention as defined in the following claims.

## Claims

1. In a power driven socket of the kind used to receive a driving member of power drive equipment, a retaining device comprising a rigid pin or rod adapted to be received in aligned bores of a socket and a driving member, said pin being secured at one end thereof to an intermediate point of an arcuate or part-annular spring clip member providing two opposed arm portions mutually biassed so that free ends of said arm portion are urged towards each other, the construction and arrangement being such that the clip member describes the greater part of a generally circular configuration having a first diameter, and is capable of being deformed by forcing the arm ends apart so as to describe the greater part of a second generally circular configuration having a second, longer, diameter, the pin extending internally across the clip member so as at least substantially to bisect said circular configurations.

2. A device as claimed in claim 1, wherein the clip member is a C-shaped spring steel clip.

3. A device as claimed in either one of claims 1 and 2, wherein said pin is secured by a welding technique to an intermediate portion of the clip member so as to extend diametrically across said clip member.

4. A device as claimed in either one of claims 1 and 2, wherein said pin is provided with an aperture extending transversely therethrough at an inner end thereof, an intermediate portion of said clip member being received in said aperture so that the pin extends diametrically across said clip member.

5. A device as claimed in claim 4, wherein means are provided to maintain the position of the pin aperture at an approximate mid-point on the clip member.

6. A device as claimed in either one of claims 4 and 5 wherein the pin is received on the clip member in a non-rigid manner.

7. A device as claimed in claim 6, wherein the pin is pivotably received on the clip member.

8. A device as claimed in any one of the preceding claims wherein the pin extends diametrically of the clip member to a length exceeding that of said first diameter and less than that of said second diameter.

9. A device as claimed in any one of the preceding claims wherein finger-engaging tab means are provided on outer end portions of the clip member.
